# FASCICULE DE BREVET EUROPEEN

(11) **EP 3 904 127 B1**
(45) Date de publication et mention de la délivrance du brevet: **04.06.2025**
(21) Numéro de dépôt: 21171299.7
(22) Date de dépôt: 29.04.2021
(51) Int. Cl.: B60C 23/04, H04B 1/3827

(54) **DISPOSITIF POUR SYSTÈME ÉLECTRONIQUE DE CONTRÔLE DE LA PRESSION DES PNEUS D'UN VEHICULE AUTOMOBILE**
VORRICHTUNG FÜR EIN ELEKTRONISCHES SYSTEM ZUR KONTROLLE DES REIFENDRUCKS EINES KRAFTFAHRZEUGS
DEVICE FOR ELECTRONIC SYSTEM FOR CHECKING THE PRESSURE OF THE TYRES OF A MOTOR VEHICLE

(30) Priorité: 29.04.2020 FR 2004261
(43) Date de publication de la demande: 03.11.2021
(73) Titulaire: ATEQ, 78340 Les Clayes-sous-Bois (FR)
(72) Inventeur: REGEF, Jean-Luc, 78340 Les Clayes-sous-Bois (FR)
(74) Mandataire: Vidon Brevets & Stratégie

(56) Documents cités:
- WO-A1-2013/063061
- WO-A1-2018/020143
- US-A1- 2002 130 771
- US-A1- 2008 252 435
- US-A1- 2019 103 677

## Description

La présente invention se rapporte au domaine des systèmes électroniques de contrôle de la pression des pneus (en anglais, « Tire Pressure Monitoring System » et dont le sigle usuel est « TPMS ») de véhicules automobiles.

La présente invention se rapporte plus particulièrement à un dispositif permettant de communiquer sur différentes fréquences, de programmer, et/ou appairer un ou plusieurs éléments, tels que les capteurs de pression, desdits systèmes électroniques de contrôle de la pression des pneus (on notera que ledit dispositif est parfois également appelé forceur de valves TPMS).

En effet, dans de tels systèmes, les capteurs de pression sont généralement logés dans les pneumatiques du véhicule et associés à l'ordinateur de bord du véhicule automobile auquel lesdits capteurs transmettent des données. L'ensemble capteurs-ordinateur de bord est ainsi désigné sous le terme « système électronique de contrôle de la pression des pneus » (ou en langue anglaise « Tire Pressure Monitoring System »).

En effet, chaque capteur de pression est classiquement équipé d'un émetteur à radiofréquences pour permettre la transmission de données à l'ordinateur de bord. L'ordinateur de bord recevant les données des capteurs peut ainsi alerter l'utilisateur du véhicule si l'un des pneus venait à crever ou à se dégonfler, entrainant un risque pour sa sécurité. On notera également que les capteurs de pression peuvent également être équipés d'un moyen de communication de type Bluetooth, et plus particulièrement BLE (pour « Bluetooth Low Energy), à la place ou en complément d'un autre moyen d'émission radiofréquence.

Cependant, le capteur de pression associé à la roue (généralement logé à l'intérieur de celle-ci) n'est pas toujours amovible, ainsi le changement d'une roue implique le changement du capteur, le nouveau capteur n'est alors plus détecté par l'ordinateur de bord du véhicule.

Il est donc nécessaire, lors du changement des pneus, d'appairer (ou associer) les capteurs logés dans les nouveaux pneus avec l'ordinateur de bord du véhicule. Cet appairage se fait au moyen d'un dispositif dédié (généralement désigné en langue anglaise sous le terme « TPMS tool »), ledit dispositif étant configuré pour activer les capteurs, récupérer et enregistrer les données pertinentes émises par le capteur, telles que l'identifiant du capteur, et les transmettre, par exemple par le biais d'un câble OBD, à l'ordinateur de bord, afin que ce dernier puisse détecter, et localiser les capteurs logés dans les pneus nouvellement installés et en recevoir les données, afin d'avertir l'usager en cas d'une chute de pression dans un desdits pneus.

Le document US2002130771 décrit un système pour capter la température et la pression des pneus, le système comprenant un module dans le pneu qui envoie des informations à une interface située dans le véhicule.

Cependant, un nouveau besoin est apparu, en plus d'un capteur de pression logé dans le pneu, il est avantageux d'intégrer un tag RFID dans lesdites pneumatiques. Ainsi, chaque pneu muni d'un tag aura également un identifiant permettant, entre autres : de connaître les caractéristiques du pneu, un suivi qualité et/ou d'usure du pneu, de faciliter leur gestion (logistique, stockage...) que cela soit dans les entrepôts, dans les usines, ou lorsqu'ils sont montés sur des véhicules (simplifiant par exemple la gestion de flottes de véhicules).

On notera qu'un tag RFID ou radio-étiquette est composé d'une antenne conçue pour fonctionner dans une bande de fréquences donnée, et d'une puce électronique, connectée à ladite antenne, qui stocke des données, tel qu'un identifiant unique.

Dans le domaine automobile, les tags RFID sont généralement conçus pour fonctionner dans la bande de fréquences dite UHF (pour Ultra-Haut Fréquence ou encore « Ultra-High Frequency » en langue anglaise), allant de 300 à 3000 MHz. Cependant, les bandes de fréquences qui peuvent être utilisées pour activer ou lire les tags RFID sont régies par les lois nationales de chaque pays, sans forcément que les fréquences utilisables se recouvrent. Par exemple, en Europe, la bande de fréquences autorisée pour interroger les tags RFID pour ce type d'application est comprise entre 865 et 868 MHz, aux États-Unis, elle est comprise entre 902 et 928 MHz, alors qu'en Chine elle est comprise entre 920 et 924 MHz environ.

Il est ainsi nécessaire de proposer un dispositif pour système électronique de contrôle de la pression des pneus d'un véhicule automobile apte à communiquer avec les différents types de tags RFID montés dans les pneumatiques de véhicules n'importe où dans le monde. Ainsi, ledit dispositif doit être capable, comme précédemment, d'activer le capteur de pression et de l'appairer à l'ordinateur de bord du véhicule, mais doit être également capable de récupérer l'identifiant du tag RFID du pneumatique pour qu'il soit associé au capteur de pression (par l'inscription de l'identifiant du tag RFID dans la mémoire du capteur de pression) et/ou transmis à l'ordinateur de bord, par exemple pour associer cette information à la bonne position du pneu sur le véhicule (l'identifiant peut également être transmis à un serveur distant hébergeant par exemple un logiciel de gestion de pneumatiques, etc.).

De plus, lesdits tags RFID sont généralement des composants passifs, c'est-à-dire que le tag n'est pas autonome énergétiquement et l'émission d'un signal par ledit tag n'est possible que s'il a reçu suffisamment d'énergie par l'intermédiaire du signal d'activation émis par un dispositif tiers. Il est donc nécessaire d'émettre un signal d'activation sur la fréquence d'accord de l'antenne d'un tag avec une puissance minimale pour activer ledit tag.

La présente invention est définie dans la revendication indépendante. L'invention est ainsi un dispositif pour système électronique de contrôle de la pression des pneus d'un véhicule automobile, ledit dispositif comprenant:
- un moyen d'émission pour communiquer avec de capteurs de pression de pneus;
- un moyen de réception de signaux en provenance des capteurs;
- une entité électronique configurée pour stocker et/ou traiter des informations véhiculées par les signaux émis par lesdits capteurs;
- un moyen de communication avec un ordinateur de bord de véhicule automobile;
- un module de communication ultra-haute fréquence configuré pour communiquer avec des tags radiofréquences, ledit module étant configuré pour émettre sur au moins une première et une deuxième bande de fréquences (Afi et Δf2) distinctes;
ledit dispositif étant configuré pour communiquer, d'une part, des informations relatives à un tag radiofréquence à au moins un capteur et, d'autre part, des informations relatives à un tag radiofréquence et/ou à des capteurs à un ordinateur de bord de véhicule, ledit dispositif étant configuré pour récupérer l'identifiant d'un tag radiofréquence et l'envoyer, par l'intermédiaire du moyen d'émission, à un capteur de pression pour qu'il y soit stocké en mémoire.

Le module ultra-haute fréquence est ainsi configuré pour, d'une part, émettre des signaux électromagnétiques déclenchant ou activant des tags RFID logés dans les pneumatiques d'un véhicule automobile et, d'autre part, recevoir les signaux émis par lesdits tags RFID.

Selon une caractéristique possible, ledit dispositif est configuré pour communiquer des informations relatives à un tag RFID à au moins un capteur. Ledit dispositif peut ainsi activer un tag RFID, récupérer son identifiant et l'envoyer, par l'intermédiaire du moyen d'émission au capteur de pression pour qu'il y soit stocké en mémoire.

Selon une autre caractéristique possible, ledit dispositif comprend un moyen de communication avec un ordinateur de bord de véhicule automobile pour transmettre les informations d'au moins un capteur.

Le moyen de communication permet par exemple d'envoyer données relatives aux capteurs et/ou tags RFID des pneus à l'ordinateur de bord du véhicule.

Selon une caractéristique possible, ledit module est configuré pour émettre dans une bande de fréquence comprise entre 800 et 1000 MHz, plus particulièrement entre 850 et 960 MHz.

Selon une caractéristique possible, ledit module est configuré pour émettre sur au moins une première et une deuxième bande de fréquences Δf₁ et Δf₂ distinctes. La première bande de fréquence Δf₁ est comprise entre 850 et 870 MHz et la deuxième bande de fréquence Δf₂ comprise entre 900 et 960 MHz.

On notera qu'on entend par bande de fréquences, un intervalle de fréquences Δfᵢ centré sur une fréquence fᵢ donnée, généralement la fréquence de résonance de l'antenne pour laquelle la conversion d'un signal électrique en un signal électromagnétique sera optimale (c'est-à-dire avec le moins de perte d'énergie). L'intervalle de fréquences Δfᵢ correspond ainsi aux fréquences minimum et maximum d'utilisation pour lesquelles l'affaiblissement n'excède pas 3 dB par rapport à la fréquence de résonance fᵢ.

Selon une autre caractéristique possible, ledit module comprend deux antennes distinctes, une première antenne configurée pour émettre sur la première bande de fréquence Δf₁ et une deuxième antenne configurée pour émettre sur la deuxième bande de fréquence Δf₂.

Selon une autre caractéristique possible, ledit module comprend au moins une antenne et un circuit de gestion d'antenne. Ledit circuit de gestion d'antenne est par exemple un circuit électronique qui gère et met en forme les signaux électriques reçus par ladite au moins une antenne.

Selon une autre caractéristique possible, le module est configuré pour activer la première antenne et/ou la deuxième antenne. Ladite activation de l'une ou des deux antennes est par exemple gérée par le circuit de gestion dudit module.

Selon une autre caractéristique possible, ledit module comprend un ou plusieurs interrupteurs permettant de sélectionner la ou les antennes aptes à émettre.

Selon une autre caractéristique possible, ledit module comprend une seule antenne accordée sur une fréquence intermédiaire fₘ situé entre les première et deuxième bandes de fréquence Δf₁, Δf₂.

Ainsi, ladite antenne présente une bande de fréquences Δfₘ recouvrant en partie les première et deuxième bandes de fréquences Δf₁, Δf₂ et notamment les fréquences f₁ et f₂ centrales desdites bandes Δf₁, Δf₂.

Selon une autre caractéristique possible, ledit module comprend une antenne qui comporte une pluralité d'éléments d'antenne de longueurs variables.

Plus particulièrement, la longueur L desdits éléments d'antenne peut ainsi présenter une valeur L₁ ou une valeur L₂, la valeur L₁ permettant d'accord l'antenne sur la première fréquence f₁ et d'émettre sur une bande de fréquence Δf₁, tandis que la valeur L₂ permettant d'accord l'antenne sur la première fréquence f₂ et d'émettre sur une bande de fréquence Δf₂.

Selon une autre caractéristique possible, lesdits éléments d'antenne comprennent chacun au moins un interrupteur configuré pour faire varier la longueur desdits éléments d'antenne.

Selon une autre caractéristique possible, ledit module comprend une antenne comportant une pluralité d'éléments d'antenne de différentes longueurs, une première longueur L₁ permettant d'accorder l'antenne sur une fréquence f₁ et une deuxième longueur L₂ permettant d'accorder l'antenne sur une fréquence f₂.

Selon une autre caractéristique possible, ladite antenne comprend un ou plusieurs interrupteurs permettant de sélectionner les éléments de l'antenne aptes à émettre. On peut ainsi sélectionner l'antenne optimale pour émettre sur une fréquence ou une bande de fréquence donnée.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
[Fig. 1], est une représentation schématique illustrant un premier mode de réalisation d'un dispositif TPMS selon l'invention ;
[Fig. 2], est une vue agrandie et de détail du dispositif de la figure 1;
[Fig. 3], est un graphique représentant le gain en fonction de la fréquence du signal émis par le module de communication ultra-haute fréquente du dispositif de la figure 1 ;
[Fig. 4a] est une représentation très schématique d'un autre mode de réalisation du dispositif selon l'invention, et plus particulièrement du module de communication ultra haute fréquence ;
[Fig. 4b] est une représentation très schématique d'un autre mode de réalisation du dispositif selon l'invention, et plus particulièrement du module de communication ultra haute fréquence ;
[Fig. 4c] est une représentation très schématique d'un autre mode de réalisation du dispositif selon l'invention, et plus particulièrement du module de communication ultra haute fréquence ;
[Fig. 5a] est un graphique représentant le gain en fonction de la fréquence du signal émis du module représenté à la figure 4a ;
[Fig. 5b] est un graphique représentant le gain en fonction de la fréquence du signal émis du module représenté à la figure 4b ;
[Fig. 5c] est un graphique représentant le gain en fonction de la fréquence du signal émis du module représenté à la figure 4c.

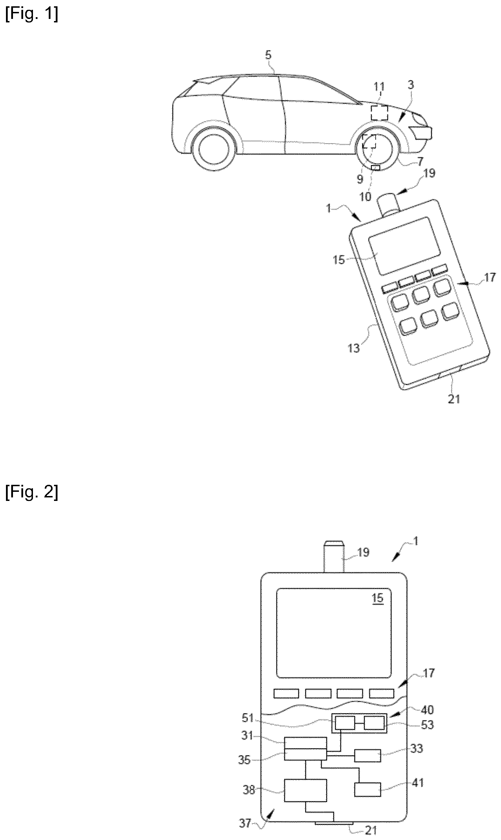

La figure 1 est une représentation très schématique d'un dispositif 1 d'activation de capteurs 9, plus particulièrement dans le présent exemple d'un dispositif 1 pour système électronique de contrôle de la pression des pneus 3 d'un véhicule automobile 5 (ledit dispositif 1 pouvant également être désigné sous les termes « activateur de valves » ou encore « forceur de valves »).

Le véhicule automobile 5, d'une part, est équipé de pneus 7 dans lesquels sont logés les capteurs 9, tel que des capteurs de pression, et d'autre part, comprend un ordinateur de bord 11 (également appelé unité de commande électronique et désignée généralement sous le sigle « ECU »).

Lesdits pneus 7 comprennent également au moins un tag 10 d'identification par radio fréquence, désigné ci-après par le terme tag RFID (pour « Radio Frequency Identification » en langue anglaise). Chacun desdits tags 10 comprend ainsi une antenne associée à une puce électronique qui permet auxdits tags de recevoir et de répondre à des requêtes radio-émises. Plus particulièrement, chacun desdits tags 10 présente un identifiant, généralement unique, stocké dans ladite puce électronique, cet identifiant étant émis par ledit tag 10 sous condition que le tag ait reçu le signal adéquat (le signal adéquat étant généralement un signal électromagnétique modulé présentant une fréquence spécifique).

Selon les régions du monde, les législations nationales n'étant pas harmonisées, lesdits tags 10 pour ce type d'application peuvent présenter des fréquences (d'interrogation et/ou de réponse) allant de 860 à 960 MHz.

Le dispositif 1, quant à lui, comprend un boitier 13, par exemple en matière plastique, un dispositif d'affichage 15, un clavier 17 et une antenne 19 pour l'émission d'un signal d'activation de capteurs, ainsi qu'une prise OBD 21 (prise OBD qui est optionnelle). Ladite prise OBD 21 est configurée pour permettre par exemple le raccordement du dispositif 1 à l'ordinateur de bord 11 d'un véhicule, notamment par l'intermédiaire d'un câble OBD ou d'un dongle.

La figure 2, quant à elle, est une vue agrandie et de détail du dispositif 1 de la figure 1.

Ledit dispositif 1 comprend ainsi :
- au moins un moyen d'émission 31 de capteurs, tels que des moyens permettant de générer des signaux (continus et/ou modulés) d'activation de capteurs, ledit moyen d'émission 31 comprenant l'antenne 19 qui permet notamment de propager au mieux lesdits signaux générés jusqu'aux capteurs 9 ;
- un moyen de réception 33 de signaux en provenance des capteurs, généralement une autre antenne logée dans le boitier 13 et configurée par exemple pour recevoir des signaux dans une bande fréquence entre 300 et 500 MHz (le capteur émettant un signal après avoir été activé par ledit moyen d'émission 31) ;
- une entité électronique 35 configurée pour stocker et/ou traiter des informations véhiculées par les signaux émis par lesdits capteurs 9 (et reçus par l'intermédiaire du moyen de réception 33) ;
- un module de communication 40 ultra haute fréquence notamment configuré pour communiquer avec des tags radiofréquences, par exemple sur un intervalle de fréquence compris entre 800 et 1000 MHz.

Le dispositif 1 peut également comprendre un moyen de communication 37 avec un ordinateur de bord 11 de véhicule automobile pour transmettre les informations d'au moins un desdits capteurs 9, informations reçues par l'intermédiaire de signaux provenant desdits capteurs 9. Le moyen de communication 37 est par exemple un module OBD qui comprend un circuit de gestion 38 de la communication OBD et la prise OBD 21 précédemment mentionnée. On notera que le circuit de gestion 38 peut également être intégré dans l'entité électronique 35. Le dispositif 1 comprend également une batterie 41 configurée pour alimenter les différents éléments.

Ledit dispositif 1 est ainsi configuré pour communiquer (par exemple par le moyen d'émission 31) des informations relatives à un tag RFID à au moins un capteur et/ou communiquer (par l'intermédiaire du moyen de communication 37) des informations relatives à un tag RFID et/ou à des capteurs à l'ordinateur de bord du véhicule.

On notera, par ailleurs, que lesdits signaux d'activation sont des signaux électromagnétiques, continus ou modulés, émis par les moyens d'activation 31, qui présentent par exemple une fréquence de 125 kHz.

Le module de communication 40 ultra-haute fréquence, quant à lui, comprend un circuit de gestion 51 et au moins une antenne 53 configurée pour émettre sur au moins une première et une deuxième bande de fréquences Δf₁ et Δf₂ distinctes, et espacées l'une de l'autre (c'est-à-dire qui ne se recouvrent pas).

La première bande de fréquences Δf₁ est par exemple comprise entre 850 et 870 MHz, tandis que la deuxième bande de fréquences Δf₂ est par exemple comprise entre 900 et 950 MHz. Plus particulièrement, la deuxième bande Δf₂ est comprise entre 900 et 930 MHz.

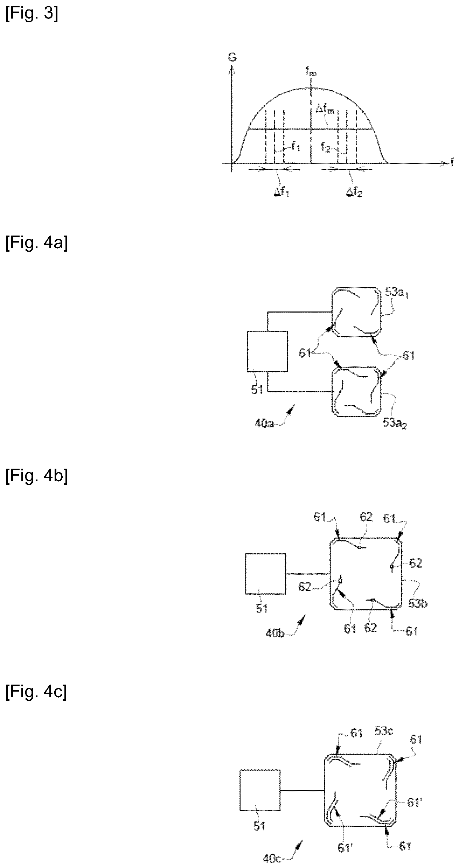

L'antenne 53 est ainsi accordée sur une fréquence de résonance fₘ, dite fréquence intermédiaire, située entre les première et deuxième bandes de fréquence Δf₁, Δf₂. De plus, comme illustré à la figure 3, la bande de fréquences Δfₘ, dite de bande de fréquences intermédiaire, sur laquelle l'antenne 53 est apte à émettre (bande également désignée sous le terme de bande passante de l'antenne) comprend les fréquences centrales f₁ et f₂ des première et deuxième bandes de fréquences Δf₁ et Δf₂.

De plus, la bande de fréquences intermédiaire Δfₘ recouvre au moins en partie, voire englobe, les première et deuxième bandes de fréquences Δf₁, Δf₂, par exemple aux alentours de 867,5 MHz pour activer des tags RFID fonctionnant en Europe et aux alentours de 902 MHz pour activer des tags RFID fonctionnant aux États-Unis.

On notera que le circuit de gestion 51 est un circuit ou un module électronique configuré pour mettre en forme et envoyer le signal électrique adéquat à une antenne, afin que celle-ci émette un signal électromagnétique utilisable par lesdits tags 10 RFID.

Dans un deuxième mode de réalisation, le dispositif est identique au dispositif de la figure 1, sauf pour le module de communication ultra-haute fréquence, module 40a plus particulièrement illustré à la figure 4a.

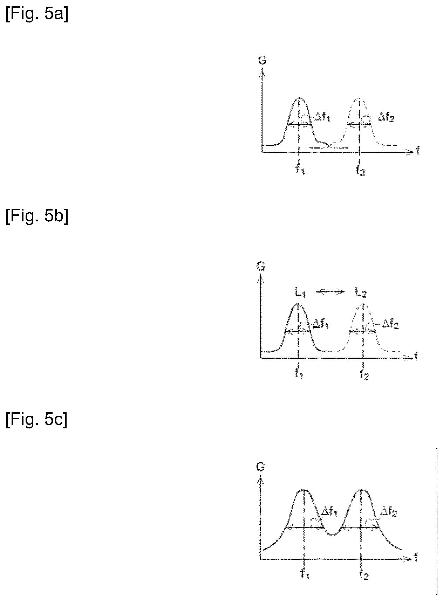

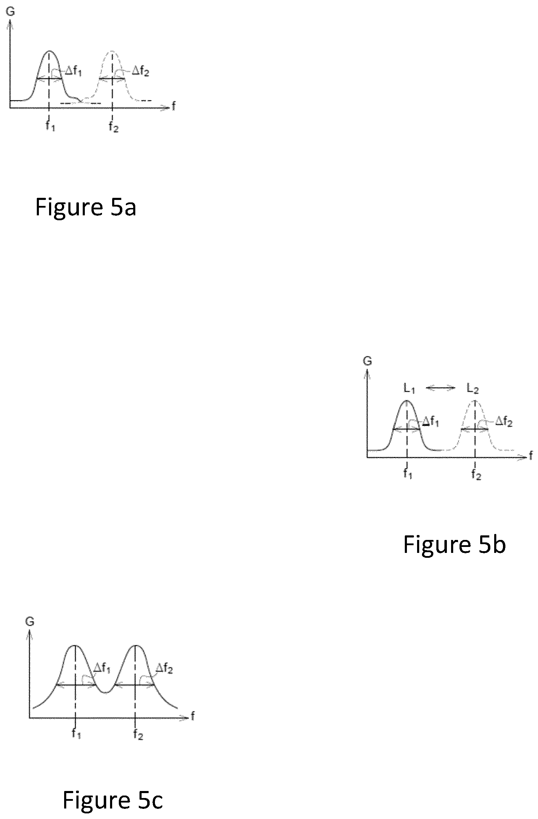

Ledit module de communication 40a comprend un circuit de gestion 51 d'antenne, une première antenne 53a₁ et une deuxième antenne 53a₂ distinctes l'une par rapport l'autre. La première antenne 53a₁ est accordée sur la première bande de fréquence Δf₁ et la deuxième antenne 53a₂ est accordée sur la deuxième bande de fréquence Δf₂. On notera qu'on entend par antennes distinctes, le fait que les éléments rayonnants 61 (éléments d'antennes) desdites antennes 53a₁ et 53a₂ sont disposés sur des substrats distants l'un de l'autre. Les signaux électromagnétiques qui peuvent être émis par les première et deuxième antennes 53a₁ et 53a₂ sont plus particulièrement illustrés à la figure 5a.

De plus, dans une variante non représentée du deuxième mode de réalisation, le module de communication 40a comprend un ou plusieurs interrupteurs configuré(s) pour activer la première antenne 53a₁ et/ou la deuxième antenne 53a₂. Ainsi, en fonction des législations nationales sur les bandes de fréquences utilisables, l'une des antennes peut être désactivée pour éviter d'émettre un signal électromagnétique sur une bande de fréquence interdite. Par ailleurs, si le dispositif selon l'invention est amené à changer de pays, il est possible de le modifier les antennes utilisables.

Dans un troisième mode de réalisation, le dispositif est identique au dispositif de la figue 1, sauf pour le module de communication ultra haute de fréquence, ledit module 40b est plus particulièrement illustré à la figure 4b.

Ledit module 40b comprend ainsi un circuit de gestion 51 et une antenne 53b qui comporte une pluralité d'éléments d'antenne 61 (éléments rayonnants) de longueurs variables L. C'est-à-dire que la longueur L des éléments rayonnants peut varier, par exemple d'une première longueur L₁ à une deuxième longueur L₂ (et inversement). De plus, les éléments d'antenne 61 comprennent un interrupteur 62 permettant la modification de la longueur desdits éléments 61, lesdits interrupteurs 62 étant par exemple commandés par ledit circuit de gestion 51. Ainsi, comme illustré à la figure 5, le gain du signal émis en fonction de la fréquence, dépend de la longueur des éléments d'antenne 61, la fréquence de résonance de ladite antenne 53b est ainsi modifiée par l'intermédiaire des interrupteurs 62, la première longueur L₁ des éléments d'antenne correspondant à une première fréquence de résonance f₁ et la deuxième longueur L₂ des éléments d'antenne correspondant à une deuxième fréquence de résonance f₂.

Dans un quatrième mode de réalisation, le dispositif est identique au dispositif de la figue 1, sauf pour le module de communication 40c qui est modifié, et qui est plus particulièrement illustré à la figure 4c.

Ledit module 40c comprend ainsi un circuit de gestion 51 et une antenne 53c qui comporte une pluralité d'éléments d'antenne (éléments rayonnants) 61 et 61' d'au moins deux longueurs différentes.

L'antenne 53c comprend ainsi des premiers éléments d'antenne 61 présentant au moins une première longueur L₁ permettant d'émettre sur la première bande fréquences Δf₁ (dont la fréquence centrale est f₁) et, des deuxièmes éléments d'antenne 61' présentant au moins une deuxième longueur L₂ permettant d'émettre sur la deuxième bande de fréquence Δf₂ (dont la fréquence centrale est f₂). On a ainsi une antenne 53c caractérisée par la figure 5c illustrant le gain en fonction de la fréquence, dans lequel le gain présente deux maximums respectivement au niveau des première et deuxième fréquences f₁ et f₂.

La fréquence de l'onde (ou signal) électromagnétique émise par l'antenne 53c est alors fonction de la fréquence du signal électrique délivré par le circuit de gestion 51 à l'antenne 53c (en effet, si la fréquence dudit signal électrique est f₁ alors le signal électromagnétique présente une fréquence sensiblement égale à f₁). Le circuit de gestion 51 peut donc sélectionner la fréquence du signal électromagnétique émis par l'antenne 53c pour que cela corresponde à une fréquence autorisée sur le territoire où le dispositif est utilisé. De plus, le gain étant maximum autour des fréquences recherchées le signal émis présentera une puissance suffisante pour activer un tag RFID, par exemple passif.

Le dispositif 1 selon l'invention, quel que soit le mode de réalisation permet ainsi d'émettre des signaux ultra-hautes fréquences sur au moins deux bandes de fréquences distinctes Δf₁ et Δf₂ centrées sur des fréquences f₁ et f₂ correspondant aux fréquences de fonctionnement de tags selon différentes régions du monde, ceci avec une puissance suffisante pour activer lesdits tags.

Les fréquences f₁ et f₂ peuvent par exemple prendre une valeur quelconque dans l'un des intervalles suivants :

**[Table 1]**

| **Région** | **Bande de fréquences** |
|---|---|
| Europe | 869,4 à 869,65 MHz |
| | 865 à 868 MHz |
| | 865.6 à 867,6 MHz |
| | 865,6 à 868 MHz |
| Amérique | 902 à 928 MHz |
| Asie et Océanie | Japon : 952 à 954 MHz |
| | Corée : 908,5 MHz à 914 MHz |
| | Australie : 915 à 928 MHz |

Ces valeurs de fréquences (ou de bandes de fréquences autorisées) dépendent dont des législations nationales, mais peuvent aussi dépendre des tags RFID qu'on souhaite activer, un dispositif pouvant être conçu pour activer un ou plusieurs types de tags RFID présentant des fréquences de fonctionnement spécifiques.

Dans une autre variante de réalisation non représentée, le dispositif selon l'invention comprend une puce GPS permettant sa localisation géographique, ledit dispositif étant configuré pour émettre des signaux électromagnétiques sur les seules bandes de fréquences autorisées en fonction de ladite localisation géographique.

Dans une autre variante de réalisation non représentée, le dispositif est configuré pour que le pays où est situé le dispositif soit indiqué par l'utilisateur, par exemple lors de la première utilisation de l'appareil, afin que l'émission de signaux électromagnétiques sur les bandes de fréquences interdites soit restreinte.

On notera également que le ou les antennes dudit module ultra-haute fréquence des différents modes et variantes de réalisation évoqués ci-dessus peuvent être : une antenne patch, une antenne IFA (pour "antenne en F inversé" ou "inverted F antenna" en langue anglaise), une antenne PIFA (pour "planar inverted F antenna" en langue anglaise), une antenne à dipôle replié, une antenne méandre, une antenne fractale, une antenne MFNSPA (pour « Minkowski Fractal Nested-Slot Patch Antenna" en langue anglaise), etc.

## Revendications

1. Dispositif (1) pour système électronique de contrôle de la pression des pneus d'un véhicule automobile, ledit dispositif (1) comprenant :
- un moyen d'émission (31) pour communiquer avec de capteurs de pression de pneus ;
- un moyen de réception (33) de signaux en provenance des capteurs ;
- une entité électronique (35) configurée pour stocker et/ou traiter des informations véhiculées par les signaux émis par lesdits capteurs ;
- un moyen de communication (37) avec un ordinateur de bord de véhicule automobile ;
- un module de communication (40 ; 40a-c) ultra-haute fréquence configuré pour communiquer avec des tags radiofréquences, ledit module (40 ; 40a-c) étant configuré pour émettre sur au moins une première et une deuxième bande de fréquences (Δf₁ et Δf₂) distinctes ;
ledit dispositif (1) étant configuré pour communiquer, d'une part, des informations relatives à un tag radiofréquence à au moins un capteur et, d'autre part, des informations relatives à un tag radiofréquence et/ou à des capteurs à un ordinateur de bord de véhicule,
ledit dispositif (1) étant configuré pour récupérer l'identifiant d'un tag radiofréquence et l'envoyer, par l'intermédiaire du moyen d'émission (31), à un capteur de pression pour qu'il y soit stocké en mémoire.

2. Dispositif selon la revendication précédente, **caractérisé en ce que** ledit module (40 ; 40a-c) est configuré pour émettre dans une bande de fréquence comprise entre 800 et 1000 MHz.

3. Dispositif selon l'une quelconque des revendications précédentes, **caractérisé en ce que** ledit module (40a) comprend deux antennes distinctes, une première antenne (53a₁) configurée pour émettre sur la première bande de fréquence Δf₁ et une deuxième antenne (53a₂) configurée pour émettre sur la deuxième bande de fréquence Δf₂.

4. Dispositif selon la revendication 3, **caractérisé en ce que** le module (40a) est configuré pour activer la première antenne (53a₁) et/ou la deuxième antenne (53a₂).

5. Dispositif selon l'une quelconque des revendications précédentes, **caractérisé en ce que** ledit module (40b) comprend une antenne (53b) qui comporte une pluralité d'éléments d'antenne (61) de longueurs variables L.

6. Dispositif selon la revendication précédente, **caractérisé en ce que** lesdits éléments d'antenne (61) comprennent chacun au moins un interrupteur (62) configuré pour faire varier la longueur L dudit élément.

7. Dispositif selon l'une quelconque des revendications 1 à 3, **caractérisé en ce que** ledit module (40c) comprend une antenne (53c) comportant une pluralité d'éléments d'antenne (61 et 61') de différentes longueurs, une première longueur L₁ permettant d'accorder l'antenne sur une fréquence f₁ et une deuxième longueur L₂ permettant d'accorder l'antenne sur une fréquence f₂.

8. Dispositif selon la revendication précédente, **caractérisé en ce que** ledit module (40c) comprend un ou plusieurs interrupteurs permettant de sélectionner les éléments (61 ou 61') de l'antenne (53c) permettant d'émettre.

## Patentansprüche

1. Vorrichtung (1) für ein elektronisches System zur Kontrolle des Reifendrucks eines Kraftfahrzeugs, wobei die Vorrichtung (1) umfasst:
- ein Sendemittel (31) zum Kommunizieren mit Reifendrucksensoren;
- ein Empfangsmittel (33) für Signale, die von den Sensoren stammen;
- eine elektronische Einheit (35), die dafür ausgelegt ist, Informationen zu speichern und/oder zu verarbeiten, die von den Signalen transportiert werden, welche von den Sensoren gesendet werden;
- ein Mittel zur Kommunikation (37) mit einem Kraftfahrzeug-Bordcomputer;
- ein Modul zur Ultrahochfrequenzkommunikation (40; 40a-c), das dafür ausgelegt ist, mit Hochfrequenzetiketten zu kommunizieren, wobei das Modul (40; 40a-c) dafür ausgelegt ist, auf mindestens einem ersten und einem zweiten Frequenzband (Δf₁ und Δf₂), die verschieden sind, zu senden;
wobei die Vorrichtung (1) dafür ausgelegt ist, einerseits Informationen, die sich auf ein Hochfrequenzetikett beziehen, an mindestens einen Sensor zu übermitteln, und andererseits Informationen, die sich auf ein Hochfrequenzetikett und/oder auf Sensoren beziehen, an einen Kraftfahrzeug-Bordcomputer,
wobei die Vorrichtung (1) dafür ausgelegt ist, die Kennung eines Hochfrequenzetiketts abzurufen und sie über das Sendemittel (31) an einen Drucksensor zu senden, damit sie dort in einem Speicher abgelegt wird.

2. Vorrichtung nach dem vorhergehenden Anspruch, **dadurch gekennzeichnet, dass** das Modul (40; 40a-c) dafür ausgelegt ist, in einem Frequenzband zwischen 800 und 1000 **MHz** zu senden.

3. Vorrichtung nach einem der vorhergehenden Ansprüche, **dadurch gekennzeichnet, dass** das Modul (40a) zwei verschiedene Antennen umfasst, eine erste Antenne (53a₁), die dafür ausgelegt ist, auf dem ersten Frequenzband Δf₁ zu senden, und eine zweite Antenne (53a₂), die dafür ausgelegt ist, auf dem zweiten Frequenzband Δf₂ zu senden.

4. Vorrichtung nach Anspruch 3, **dadurch gekennzeichnet, dass** das Modul (40a) dafür ausgelegt ist, die erste Antenne (53a₁) und/oder die zweite Antenne (53a₂) zu aktivieren.

5. Vorrichtung nach einem der vorhergehenden Ansprüche, **dadurch gekennzeichnet, dass** das Modul (40b) eine Antenne (53b) umfasst, die mehrere Antennenelemente (61) mit variablen Längen L aufweist.

6. Vorrichtung nach dem vorhergehenden Anspruch, **dadurch gekennzeichnet, dass** die Antennenelemente (61) jeweils mindestens einen Schalter (62) umfassen, der dafür ausgelegt ist, die Länge L des Elements zu variieren.

7. Vorrichtung nach einem der Ansprüche 1 bis 3, **dadurch gekennzeichnet, dass** das Modul (40c) eine Antenne (53c) umfasst, die mehrere Antennenelemente (61 und 61') mit unterschiedlichen Längen aufweist, einer ersten Länge L₁, die es ermöglicht, die Antenne auf eine Frequenz f₁ abzustimmen, und einer zweiten Länge L₂, die es ermöglicht, die Antenne auf eine Frequenz f₂ abzustimmen.

8. Vorrichtung nach dem vorhergehenden Anspruch, **dadurch gekennzeichnet, dass** das Modul (40c) einen oder mehrere Schalter umfasst, die es ermöglichen, die Elemente (61 oder 61') der Antenne (53c) auszuwählen, dies es ermöglichen, zu senden.

## Claims

1. [A Device (1) for an electronic tyre pressure monitoring system of an automobile vehicle, said device (1) comprising:
- a transmission means (31) for communicating with tyre pressure sensors;
- a means for receiving (33) signals from the sensors;
- an electronic entity (35) configured to store and/or process information conveyed by the signals transmitted by said sensors;
- a means for communicating (37) with an automobile vehicle on-board computer;
- an ultra-high frequency communication module (40; 40a-c) configured to communicate with radiofrequency tags, said module (40; 40a-c) being configured to transmit on at least one first and second distinct frequency bands (Δf₁ and Δf₂);
said device (1) being configured to communicate, on the one hand, information relating to a radiofrequency tag to at least one sensor and, on the other hand, information relating to a radiofrequency tag and/or to sensors to a vehicle on-board computer,
said device (1) being configured to retrieve the identifier of a radiofrequency tag and send it, via the transmission means (31), to a pressure sensor for storage therein.

2. The device according to the preceding claim, **characterised in that** said module (40; 40a-c) is configured to transmit in a frequency band between 800 and 1000 MHz.

3. The device according to any of the preceding claims, **characterised in that** said module (40a) comprises two distinctantennas, a first antenna (53a₁) configured to transmit on the first frequency band Δf₁ and a second antenna (53a₂) configured to transmit on the second frequency band Δf₂.

4. The device according to claim 3, **characterised in that** the module (40a) is configured to activate the first antenna (53a₁) and/or the second antenna (53a₂).

5. The device according to any of the preceding claims, **characterised in that** said module (40b) comprises an antenna (53b) which includes a plurality of antenna elements (61) having variable lengths L.

6. The device according to the preceding claim, **characterised in that** said antenna elements (61) each comprise at least one switch (62) configured to vary the length L of said element.

7. The device according to any of claims 1 to 3, **characterised in that** said module (40c) comprises an antenna (53c) including a plurality of antenna elements (61 and 61') having different lengths, a first length L₁ for tuning the antenna to a frequency f₁ and a second length L₂ for tuning the antenna to a frequency f₂.

8. The device according to the preceding claim, **characterised in that** said module (40c) comprises one or more switches for selecting the elements (61 or 61') of the antenna (53c) for transmitting.]
